# EUROPEAN PATENT SPECIFICATION

(11) **EP 2 216 155 B1**
(45) Date of publication and mention of the grant of the patent: **21.12.2016**
(21) Application number: 09003815.9
(22) Date of filing: 17.03.2009
(51) Int. Cl.: B29C 44/18, B01F 13/10, B63B 5/24, B63B 9/06

(54) **Device and process for the injection of filling material inside boats**
Vorrichtung und Verfahren zum Einspritzen von Füllmaterial im Innern von Schiffen
Dispositif et processus pour l'injection de matériau de remplissage dans les bateaux

(30) Priority: 06.02.2009 IT MI20090156
(43) Date of publication of application: 11.08.2010
(73) Proprietor: FB DESIGN S.r.l., 23841 Annone Brianza (Prov. of Lecco) (IT)
(72) Inventor: Buzzi, Fabio, 23841 Annone Brianza (LC) (IT)
(74) Representative: Valentini, Giuliano

(56) References cited:
- EP-A- 1 048 429
- EP-A2- 1 873 054
- JP-A- 2000 185 689
- US-A- 3 080 267
- US-A- 4 021 874
- US-A- 4 666 393
- US-A1- 2003 058 734

## Description

The present invention concerns a device and a process for the production of unsinkable boats and, in particular, a device and a process for the injection of a filling material inside boats comprising a plurality of separate chambers.

In the nautical field the use of boats which are made unsinkable via the installation of buoyancy reserves is well known.

Boats are made joining two shells, one upper, generally the deck, and one lower, the hull, generally made of fibre-reinforced resin.

The buoyancy reserve is obtained by means of a process of filling the "empty" spaces between the two shells forming the boat, i.e. the spaces not used for housing cables and on-board systems.

The filling material is generally made of a closed cell polyurethane foam obtained by mixing, in pre-set ratios, different components (polyol and isocyanate) which react, forming a polymer, increasing their volume and expanding in the form of foam. The volumetric expansion ratio between the components in the final state of expanded foam and the initial state of liquid is high and varies according to the foam density required. Different density values and expansion ratios are obtained by changing the proportions between the reagents.

The operations for filling the boat can be problematic in terms of uniform density of the polyurethane foam inside the volume of the chambers.

Generally the chambers have a substantially longitudinal development with vents located at the ends and median injection point. The vents, appropriately positioned, guarantee correct expulsion of the air from the chambers due to the free expansion of the foam. This results in distribution of foam with uniform density inside the chambers.

A possible problem of the process concerns the risk of not obtaining the pre-set density of the foam, in the expanded state, during design of the boat.

A very serious problem in the production of unsinkable boats is the possible permanent deformation of the fibreglass shells that form the boat. In fact, the upper and lower shells of the boat have reduced rigidity and, due to the pressure exerted on the surfaces by the polyurethane foam during expansion, they can be easily deformed. To avoid permanent deformation, the shells are kept in their respective production moulds, rigidly assembled, during injection of the polyurethane filling liquid.

The United States patent no. US 7332115 in the name of Boston Whaler describes a process for the construction of boats by injection of a filling foam inside the chamber between the two shells, lower and upper, which form the boat. The foam injection, expansion and solidification operations are performed by keeping both the shells in their respective moulds. The filling foam acts as an adhesive and, following expansion and solidification, joins the two shells in one single piece.

Furthermore, the construction of boats with a plurality of separate chambers inside is known in the state of the art. In particular the chambers can be produced by means of structural elements positioned between the shells, upper and lower, and arranged according to the longitudinal development of the hull.

For example the United States patent application no. US 2008/035041, in the name of the Applicant, describes the production of unsinkable boats provided with a plurality of separate chambers.

Said boats are produced by joining two shells, one upper, generally the deck, and one lower, the hull, generally made of fibre-reinforced resin. In the main chamber created by the combination of the two shells, parallel structural elements are arranged which follow the longitudinal development of the hull, thus forming a plurality of chambers. The longitudinal elements constitute the lateral walls of the chambers. The empty space inside the chambers of the boat is filled with a closed cell high density polyurethane foam to make the boat unsinkable.

If suitable precautions are not taken during filling of the boat, structural deformations may occur due to the force exerted by the pressure of the foam, during expansion, on the lateral walls of the chamber, i.e. on the longitudinal structural elements.

Non-uniform expansion of the foam in one chamber with respect to the adjacent ones can cause irreversible and unpredictable deformation of the longitudinal elements, affecting the resistance of the structure.

Deformations of the longitudinal structural elements and shells of the hull and deck can result in the boat being rejected and eliminated from the production line.

US-A-4666393 discloses an apparatus for manufacturing polyurethane foam slabs with a batch process. The apparatus has a single production unit including a measuring tank for isocyanate and a stirring tank in which polyol is supplied. After suitable mixing, the solution of the two reagents is poured into an open foam tank in which the foam solution can freely expand and raise.

US-A-3080267 discloses a method for producing a boat hull structure in which an external shell of thermoplastic material (high impact plastic) is firstly shaped starting from a flat sheet and then placed in a female mold. A single cavity is defined in the shell by a male mold placed inside the shell at a desired distance from the inner surface of the shell, and then a polyurethane foamable liquid is poured into the cavity, thus filling the cavity with polyurethane plastic foam at the end of the expansion phase. Upon removal of the male mold, a thermosetting composition containing glass fiber is then applied over the polyurethane foam. JP-2000-185689A discloses a method for injecting water-reacting urethane foam liquid into a space between the hull member and the deck member of a boat. Injection is carried out through two holes respectively formed at raised part at the bow and stern of the deck member.

EP 1 873 054 discloses a device and a process for the injection of a filling material in a boat comprising a plurality of separate chambers.

The object of the present invention is to provide a device and a process for the injection of filling material inside boats formed of a plurality of separate chambers, avoiding permanent deformation of the fibreglass shells and non-uniform expansion of the filling material.

A further object is to permit filling of boats of the above type in order to prevent the occurrence of deformation in the partition walls of the chambers.

These and other objects are achieved by means of a device as claimed in claim 1 and a process as claimed in claims 13 for the injection of filling material inside boats consisting of a plurality of separate chambers. Further specific characteristics of the present invention are given in the respective dependent claims.

A device according to the present invention consists of a plurality of units for preparation and injection of the filling material. Each unit includes at least one container for metering a first reagent, at least one mixing container for metering a second reagent and subsequently mixing it with the first reagent, and mixing means for forming the hull filling material.

According to one possible embodiment of the present invention, the mixing means consist of a stirrer for each unit and include a plurality of blades or rotors which can be inserted in, or removed from, the respective mixing container of each unit.

The mixing means can be moved between an operating position, in which each rotor is inserted in the respective mixing container, and a non-operating position in which each rotor is extracted from the respective mixing container.

The device furthermore includes means for the injection of the filling material into the separate chambers, and includes flow control means such as to ensure simultaneous injection of the filling material into all the separate chambers of the hull.

The injection means consist of an injection duct for each of the separate chambers that form the hull.

Each injection duct connects a mixing container to a respective chamber of the boat, permitting passage of the filling material.

The flow control means are arranged along the injection ducts and, since they are activated simultaneously, they guarantee simultaneous injection of the filling material into each chamber.

The flow control means include, for example, a valve which comprises, as a shutter, a sliding perforated plate which can be activated preferably by an actuator.

In particular, since the filling material is injected simultaneously into the chambers, permanent deformation of the longitudinal structures between two adjacent chambers is advantageously avoided.

In fact, following simultaneous injection of the filling material and its free expansion, each longitudinal element positioned between two adjacent chambers is subject to forces having substantially the same intensity, therefore balancing one another.

The process for the injection of a filling material according to the present invention includes firstly a step in which a first reagent and a second reagent are metered into separate containers of each unit, and then a step in which the two reagents are mixed for a pre-set time in the mixing container of each unit. At the end of this time the filling material is injected simultaneously into all the separate chambers forming the boat.

In each unit of the device, the first reagent is metered into a separate container, while the second reagent is metered into the mixing container. The reagents are metered in pre-set proportions in order to obtain a closed cell filling foam with the required density.

The components of the preparation and injection units for the filling material are activated simultaneously so that the polyurethane liquid formation steps and the injection steps are simultaneous in all the units. The polyurethane liquid thus formed in each unit is injected simultaneously into the corresponding chamber of the hull. Flow control means are provided in each unit and are activated simultaneously in order to inject the filling material simultaneously into each chamber.

Further characteristics and advantages of the present invention will become clearer from the following description, provided by way of example with reference to the accompanying schematic drawings, in which:
- Figure 1 is a front elevation view of some components of a device according to a possible embodiment of the present invention;
- Figure 2 is a front elevation view of a single unit for preparation and injection of the filling material into a respective chamber of the boat in one of its operating conditions;
- Figure 3 is a front elevation view as in Figure 2 in another of its operating conditions;
- Figure 4 is a perspective view of a possible embodiment of the flow control means in the closed position, partially sectioned;
- Figure 5 is a perspective view of a possible embodiment of the flow control means in the open position, partially sectioned;
- Figure 6 shows the initial condition of the device during the process according to the present invention;
- Figure 7 shows a first step of preparation of the filling material;
- Figure 8 shows a second step of preparation of the filling material;
- Figure 9 shows the injection step of the filling material;
- Figure 10 shows the final step of the process according to the present invention; and
- Figure 11 shows the forces acting on a longitudinal structural element according to the detail highlighted in Figure 10.

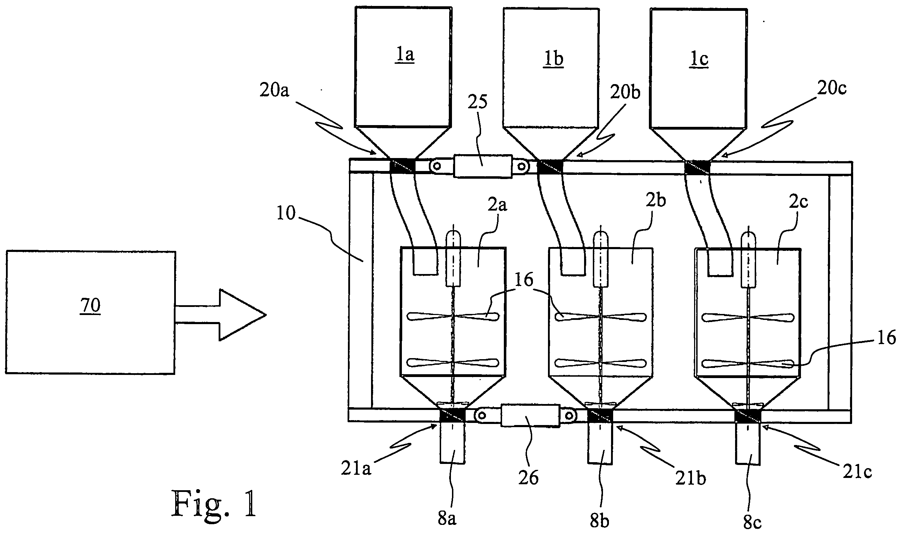

Figure 1 shows a device provided with three units (identified by the suffixes a-c combined with the numerical references) for simultaneous injection of the filling material into a boat provided with three separate chambers.

The process for filling each individual chamber is performed by means of a unit for preparation and injection of the filling material which includes a plurality of components necessary for formation of the polyurethane filling liquid and its subsequent injection into one single chamber. The device therefore includes a number of units equal to the number of chambers to be filled.

The filling material consists for example of a polyurethane liquid of the bicomponent type, produced by the mixing of two initially separate reagents, for example isocyanate and polyol.

The polyurethane liquid is injected simultaneously into the chambers where it begins its free expansion, in the form of foam, due to a chemical reaction. In order to obtain a buoyancy reserve and unsinkability of the boat, the polyurethane foam is preferably of the closed cell high density type.

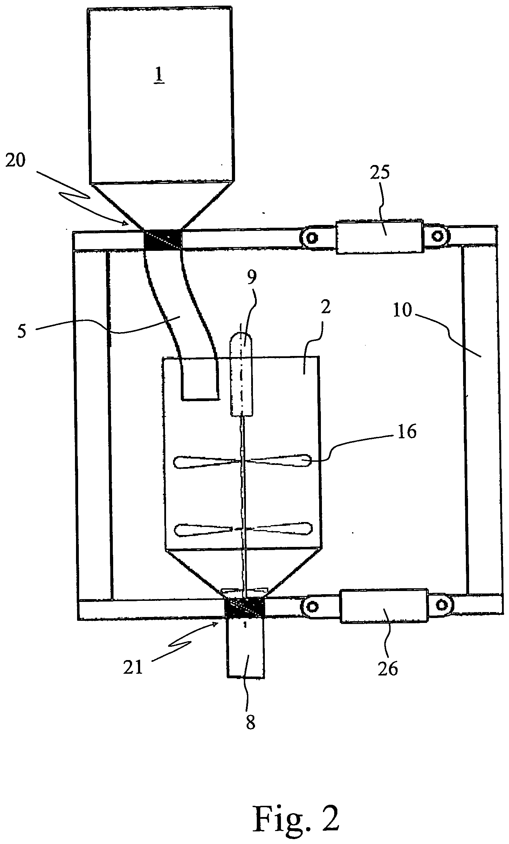

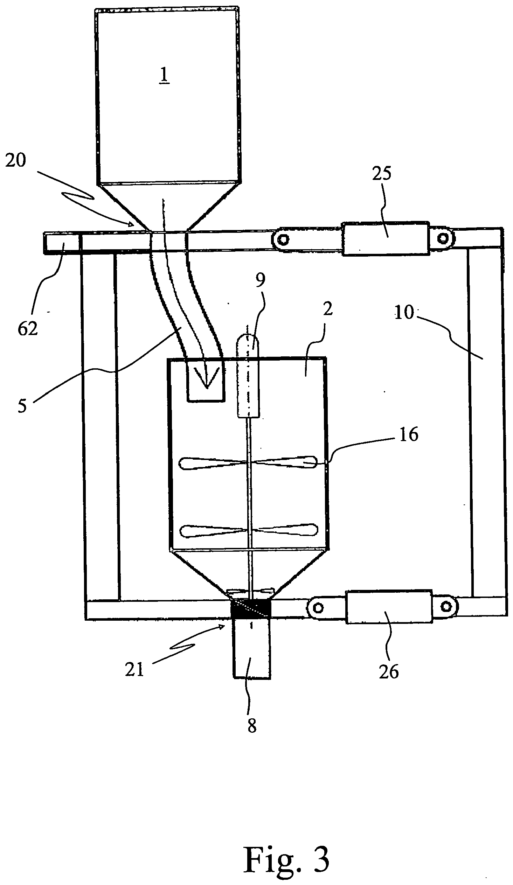

Figures 2 and 3 show a front view of a unit for preparation and injection of the filling material with the components necessary for preparing and injecting the polyurethane liquid into one single chamber.

The unit includes two graduated containers 1 and 2, for example of cylindrical shape, suitable for containing the reagents for formation of the filling liquid, initially separated. The two reagents are initially each contained in each of the two containers 1 and 2, respectively.

The first graduated container 1 has the funnel-shaped lower end, terminating in a control valve 20. The valve controls the flow from the container 1 to an outlet pipe 5.

The second graduated container 2 initially contains the second reagent and is positioned below the container 1, communicating with it via the outlet pipe 5, partially immersed in the open upper end of the container 2.

Mixing of the second reagent in the container 2, by means of a stirrer 16, begins before the first reagent starts to flow through the outlet pipe 5. After opening of the control valve 20 by means of an actuator 25, the first reagent is transferred, via the outlet pipe 5, into the container 2 containing the second reagent.

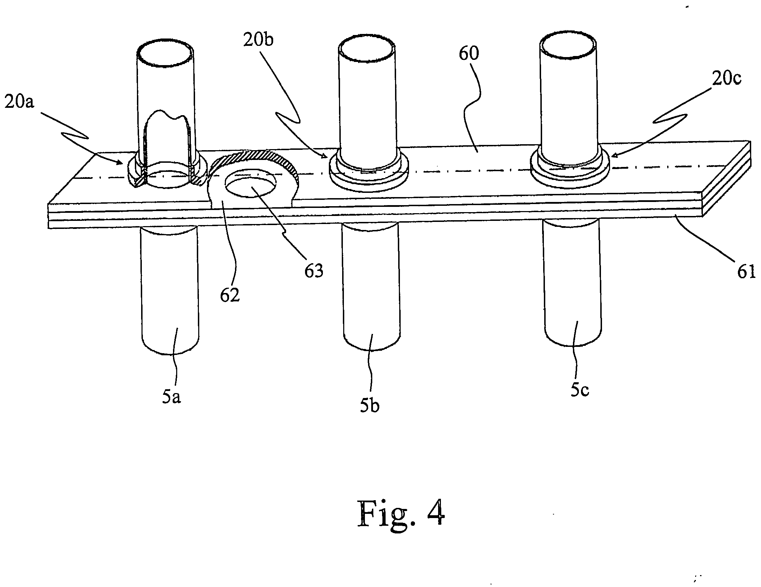

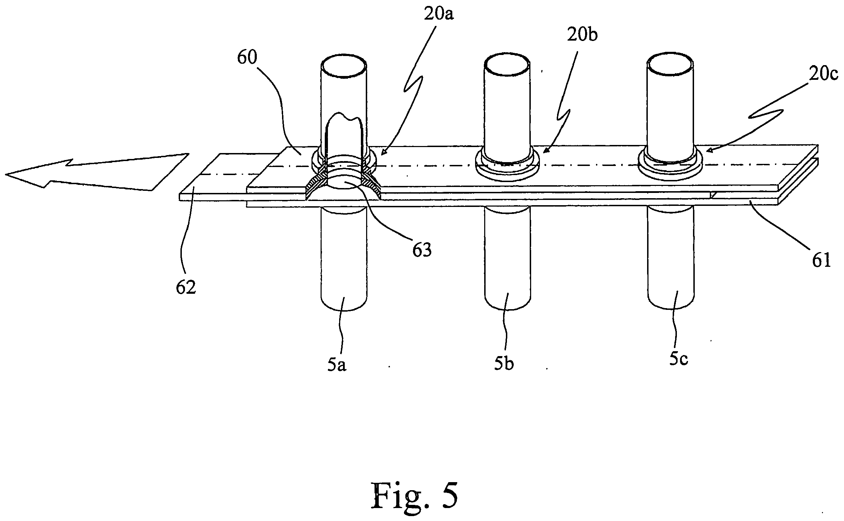

Figure 2 illustrates by way of example the condition in which the valve 20 is closed, while Figure 3 illustrates the condition in which the valve 20, after the command given to the actuator 25, is set to the open position. As will be explained in further detail below with reference to Figures 4 and 5, the actuator 25 acts on a perforated plate 62 to simultaneously open or close all the valves 20.

Mixing of the reagents continues in the container 2 for the time necessary to obtain correct mixing of the two reagents which form the polyurethane filling liquid.

The container 2 also has a funnel-shaped lower end terminating in a flow control valve 21 activated by an actuator 26. Downstream of the control valve 21 is an injection duct 8 which guarantees the passage of the reagents, mixed inside the container 2 by the stirrer 16, into one of the chambers of the boat (not shown in Figures 2 and 3).

The stirrer is operated by an electric motor 9, or similar, and includes a stem on which a plurality of blades or rotors are mounted for mixing the reagents. Each of the blades of the stirrer 16 can be secured in a removable manner on the stem to facilitate cleaning after removal. Also the stirrer 16 is preferably connected to the motor 9 in a removable manner to permit replacement or cleaning and servicing operations.

The graduated containers 1 and 2 are secured to a frame 10 and each of the stirrers 16 can be moved from a non-operating position, in which the respective blades are extracted from each container 2, and an operating position in which the respective blades are immersed in each container 2. Movement means can be provided for each stirrer, for example pneumatic, hydraulic, electric actuators or similar, fixed to the frame 10.

The containers 1 and 2, the respective control valves 20 and 21, the outlet pipe 5, the injection duct 8, the stirrer 16 and the means 18, 19 and 80 for movement of the latter constitute the unit for preparation and injection of the filling material into a single chamber of the boat.

According to the number of separate chambers forming the boat, a frame is provided on which the same number of units are installed as the number of chambers into which the filling material will be injected.

As previously mentioned, Figure 1 shows a possible embodiment of the device according to the present invention in which on the frame 10 three units (suffixes a-c) are installed side by side for filling a boat consisting of three separate chambers 30a-30c. The components of the units are operated simultaneously.

Figures 4 and 5 show in partial section a possible embodiment of the flow control valves 20a-20c of the containers 1a-1c. The valves include three overlapped metal plates, two of which are fixed (the upper one 60 and the lower one 61), while the central one 62 slides between them.

The upper plate 60 and the lower plate 61 are perforated at the point where each of the discharge collectors 6a-6c of the containers 1a-1c is secured. The central plate 62 is provided with holes 63 having the same pitch as those on the upper and lower plates.

When the control valves are closed and you wish to prevent the flow of the first reagent into the outlet pipes 5a-5c, the central plate 62 is in a position such that the holes 63 do not coincide with the holes of the lower plate 61 and upper plate 60, and are offset with respect to them (Figure 4). The central plate 62 guarantees the seal, which can be facilitated using known techniques such as the insertion of rubber rings, e.g. O-rings (not shown).

As can be seen in Figure 5, the movement of the central plate 62 for a pre-set stroke places the holes 63 to coincide with the collectors 6a-6c and thus determines simultaneous opening of the control valves. The first reagent, contained in the containers 1a-1c, is thus transferred by gravity via the outlet pipes 5a-5c which lead into the containers below 2a-2c. The movement of the plate 62 can be commanded by means of one single actuator 25 of the hydraulic or electric type or similar, connected to the central plate 62.

It should be noted that although explicit reference is made to the control valves 20a-20c of the containers 1a-1c, the embodiment just described can also be applied to the valves 21a-21c of the containers 2a-2c, with an actuator 26 controlling simultaneous passage of the polyurethane filling liquid via the injection ducts 8a-8c. The device can also include a control module 70 (Figure 1) appropriately programmed to automatically control and command the components of the single units in order to guarantee correct performance of the operations during the whole preparation and filling cycle.

Also the stirrers 16 can be moved simultaneously by means of one or more hydraulic or electric actuators or similar, also controlled simultaneously by the control module 70.

The frame 10 on which the units are installed can be secured above the mould of the upper shell of the boat or can be positioned on a framework below which the moulds of the shells are positioned.

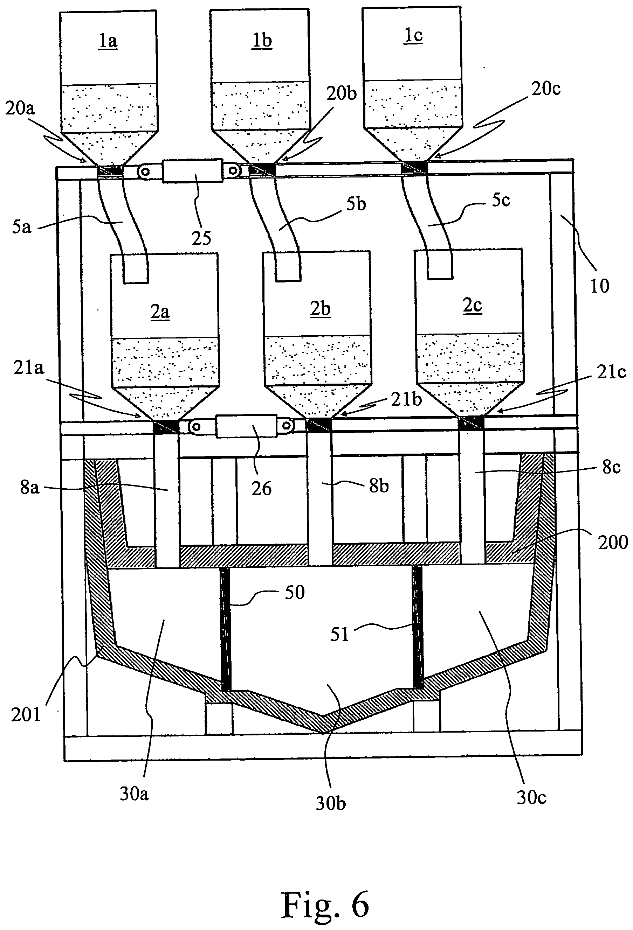

With reference to Figures 6-10 the steps of the process for simultaneous injection of the filling material inside a boat consisting of three chambers 30a-30c will now be described.

The three chambers 30a-30c, shown in section in Figures 6-10, are separated by the longitudinal structural elements 50 and 51 positioned and secured in a known way between the upper shell 200 and the lower shell 201 of the boat. The shells 200 and 201 can remain housed inside the respective moulds for the time necessary for injection of the filling material.

The initial step of the process, illustrated in Figure 6, entails preparation of the device and checking the cleanness of the containers 1a-1c and 2a-2c, the seal of the outlet pipes 5a-5c and injection ducts 8a-8c, the operation of the system for activation of the control valves 20a-20c and 21a-21c, the operation of the means for movement of the stirrers 16 and the operation of the stirrers.

Following these checks, the control valves 20a-20c and 21a-21c are closed, the stirrers 16 are raised to the non-operating position and the first reagent (e.g. isocyanate) is loaded according to the pre-set quantity in the containers 1a-1c.

The second reagent (e.g. polyol) is loaded according to the pre-set quantity in the containers 2a-2c.

The quantities of the two reagents loaded in the containers of each unit depend on the volume of each of the chambers to be filled and the density of the filling material required after expansion.

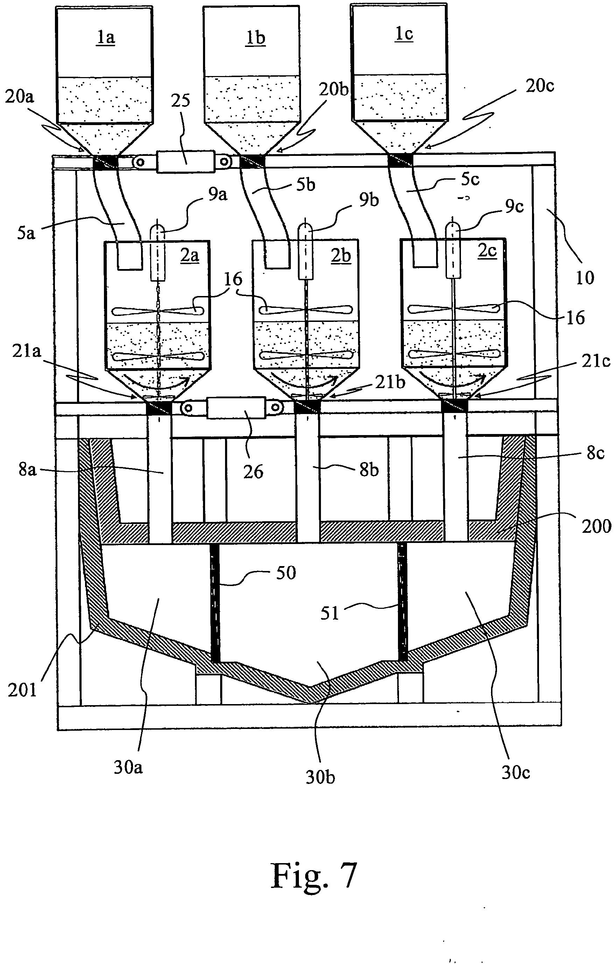

Figure 7 illustrates the next step in the process, in which the stirrers 16 are set to the operating position, i.e. immersed in the containers 2a-2c, and mix the second reagent contained in the containers 2a-2c by means of the rotating blades.

Once a pre-set time has elapsed, the control valves 20a-20c of the containers 1a-1c are opened simultaneously by the actuator 25 causing transfer by gravity of the first reagent into the containers 2a-2c below via the outlet pipes 5a-5c.

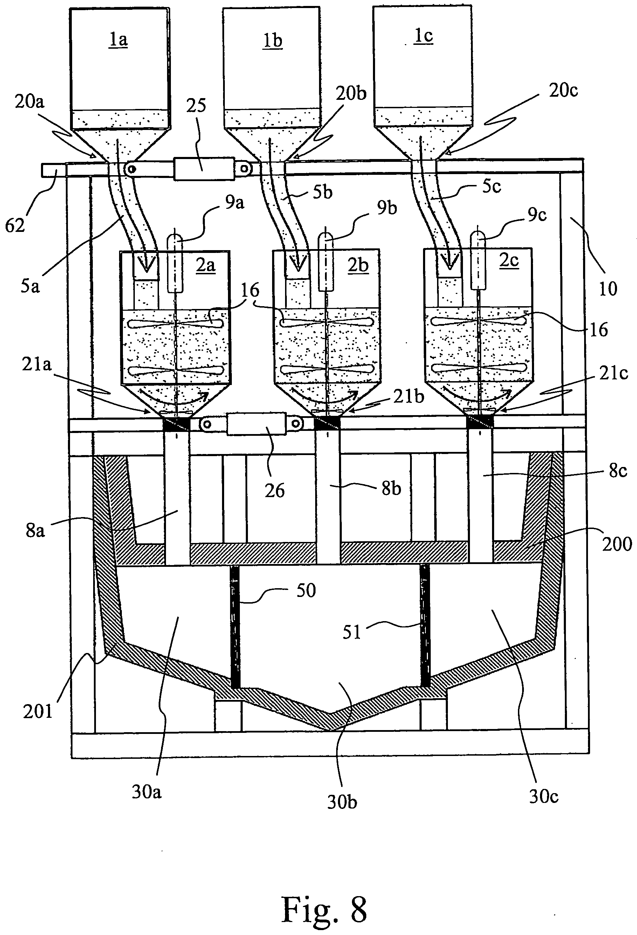

The blades of the stirrers 16 will mix the first and second reagent, now both contained in the containers 2a-2c (Figure 8). The mixing will last the time necessary for formation of the polyurethane liquid and its chemical activation.

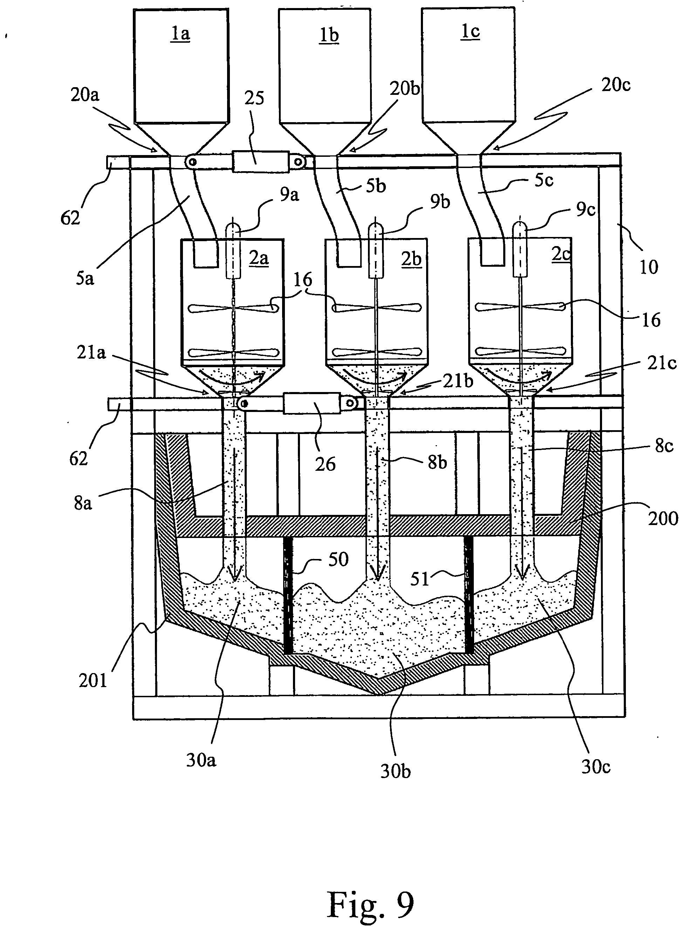

Figure 9 shows the next step in the process in which the polyurethane liquid formed is injected into the chambers 30a-30c of the boat. The control valves 21a-21c of the containers 2a-2c are opened simultaneously by the actuator 26 to simultaneously fill the chambers 30a-30c via passage of the polyurethane liquid, by gravity, through the injection ducts 8a-8c. The mixing movement imparted by the blades of the stirrers 16 continues until the containers 2a-2c are completely empty.

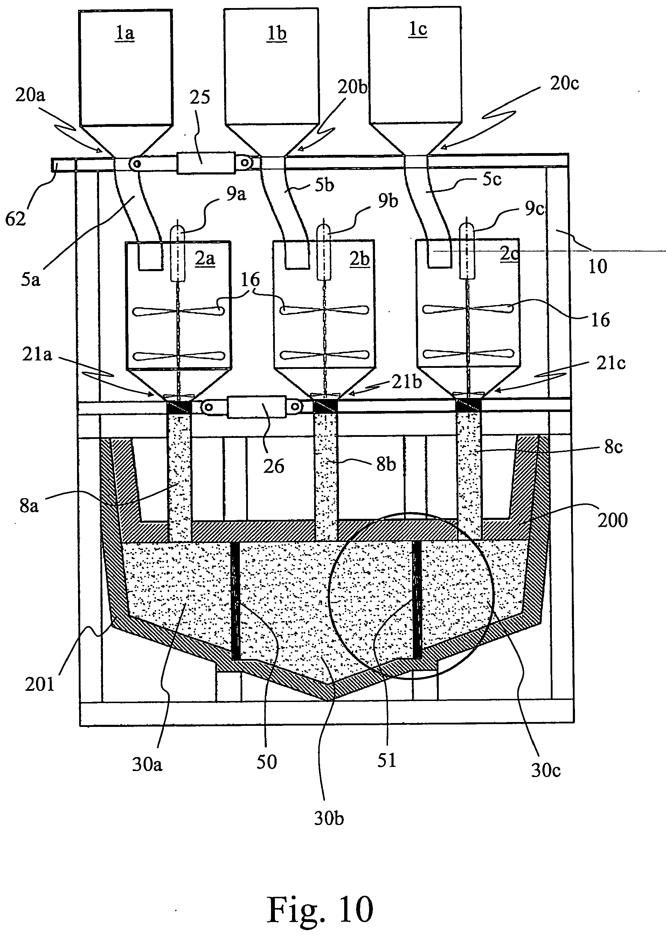

Figure 10 illustrates the last step in the process during which the polyurethane liquid injected into the chambers 30a-30c begins its polymerisation in the form of foam, occupying the free volume.

The flow control valves 21a-21c of the containers 2a-2c are closed by the actuator 26 since the expanding polyurethane foam tends to flow back into the injection ducts 8a-8c. The motors 9a-9c of the stirrers 16 are switched off and set to the non-operating position in which they are extracted from the containers 2a-2c.

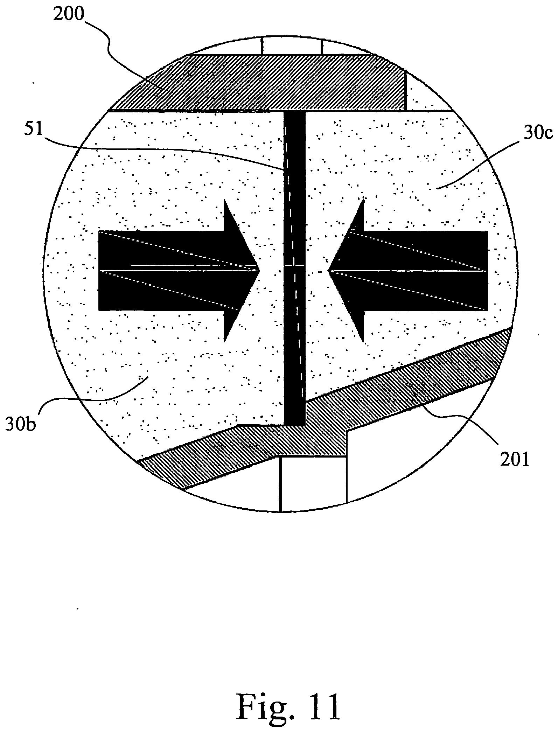

As shown in the detail of Figure 11, with reference to the longitudinal structural element 51, the forces acting on the opposite faces, belonging to the two adjacent chambers 30b and 30c, are balanced due to the simultaneous expansion of the polyurethane filling foam.

By simultaneous injection of the foam, each of the longitudinal structural elements 50 and 51 are balanced and are not subject to deformation.

Various modifications can be made to the embodiment illustrated here without departing from the scope of the present invention. For example, although reference is made here to the filling of a boat with three separate chambers, the present invention can be used for the simultaneous filling of boats with any number of chambers, providing a corresponding number of units for preparation and injection of the filling material.

## Claims

1. A device for the injection of a filling material into a plurality of separate chambers (30a, 30b, 30c) of a boat, including units for the preparation and injection of said filling material, each of said units including at least one graduated container (1) for metering a first reagent, at least one graduated mixing container (2) for metering a second reagent and for mixing said first reagent with said second reagent, said at least one mixing container (2) being provided with means (9, 16) for mixing said first reagent and said second reagent to form said filling material, as well as injection means (8) and control means (21, 26, 70) to inject said filling material into said plurality of separate chambers (30a, 30b, 30c), wherein a preparation and injection unit is provided for each of said chambers (30a, 30b, 30c) and wherein said control means include a valve (21) common to all said units for simultaneously controlling the flow of said filling material from each of said units to a respective chamber and simultaneously injecting said filling material into said separate chambers (30a, 30b, 30c).

2. The device as claimed in claim 1, wherein said common valve (21) includes a perforated plate (62) sliding by means of one single actuator (26).

3. The device as claimed in claim 1, said device including a programmable control module (70).

4. The device as claimed in claim 3, wherein said programmable control module (70) includes at least one timer for the timing operation of said mixing means (9, 16) and said injection control means (21, 26).

5. The device as claimed in claim 1, wherein said injection means consist of an injection duct (8) coming out of the mixing container of each of said units to inject the filling material into each of said separate chambers (30a, 30b, 30c).

6. The device as claimed in claim 1, wherein said mixing means (9, 16) include at least one rotating stirrer (16) for each of said units.

7. The device as claimed in claim 6, wherein said mixing means (9, 16) are movable from an operating position, in which a rotating stirrer (16) is inserted in the mixing container (2) of each unit, to a non-operating position in which said rotating stirrers (16) are extracted from each of said mixing containers (2).

8. The device as claimed in claim 6, wherein each of said stirrers (16) is removable.

9. The device as claimed in claim 6, wherein each of said stirrers (16) includes a plurality of stirring blades or rotors secured in a removable manner on a rotating drive stem.

10. The device as claimed in any of the preceding claims, wherein said units are mounted on a common frame (10).

11. The device as claimed in claim 10, wherein said common frame (10) includes means for fixing said common frame on a framework or on a bridge above said boat.

12. The device as claimed in claim 10, wherein said common frame (10) includes means for fixing said common frame on a mould of said boat.

13. A process for the injection of a filling material in a boat comprising a plurality of separate chambers (30a, 30b, 30c), including the steps of:
i. providing a boat structure having a plurality of separate chambers, each chamber being defined by longitudinal structural elements (50, 51) positioned and secured between an upper shell (200) and a lower shell (201) of the boat;
ii. providing a device according to any of claims 1 - 12 the device including units for the preparation and injection of said filling material and control means (21, 26, 70) to inject said filling material into said plurality of separate chambers (30a, 30b, 30c), wherein each of said units includes at least one graduated container (1) for metering a first reagent, at least one graduated mixing container (2) for metering a second reagent and for mixing said first reagent with said second reagent,
iii. metering a first reagent and a second reagent into said separate containers (1, 2) of said units;
iv. mixing said first reagent and said second reagent for a pre-set time in the respective mixing container (2) of each unit to obtain said filling material; wherein said filling material is prepared in a plurality of distinct preparation and injection units corresponding to the number of chambers to be filled, wherein said filling material is injected simultaneously into said separate chambers (30a, 30b, 30c), wherein said control means include a valve (21) common to all said units for simultaneously controlling the flow of said filling material from each of said units to a respective chamber, and wherein said first reagent and said second reagent are metered into each of said units in quantities that depend on the volume of each chamber, to obtain in each chamber a filling foam of the closed cell type having the same density for all the chambers (30a, 30b, 30c).

14. The process as claimed in claim 13, wherein a step is provided in which said second reagent is stirred for a pre-set time before it is mixed with said first reagent.

15. The process as claimed in claim 13, wherein the simultaneous injection of said filling material into said separate chambers (30a, 30b, 30c) is performed by gravity.

16. The process as claimed in claim 13, wherein said second reagent is metered into a mixing container (2a, 2b, 2c) of each unit.

17. The process as claimed in claim 13, wherein said first reagent is metered into a container (1a, 1b, 1c) distinct from said mixing container (2a, 2b, 2c) of said unit.

18. The process as claimed in claim 13, wherein said first reagent consists of isocyanate and said second reagent consists of polyol.

## Patentansprüche

1. Eine Vorrichtung zum Einspritzen eines Füllmaterials in eine Mehrzahl von getrennten Kammern (30a, 30b, 30c) eines Bootes, umfassend Einheiten zur Vorbereitung und zum Einspritzen des Füllmaterials, wobei jede der Einheiten mindestens einen Messbehälter (1) zur Dosierung eines ersten Reagenz, mindestens einen Mess- und Mischbehälter (2) zur Dosierung eines zweiten Reagenz und zum Mischen des ersten Reagenz mit dem zweiten Reagenz aufweist, wobei der mindestens eine Mischbehälter (2) mit einer Einrichtung (9, 16) versehen ist zum Mischen des ersten Reagenz und des zweiten Reagenz, um das Füllmaterial zu bilden, sowie eine Injektionseinrichtung (8) und Steuereinrichtungen (21, 26, 70), um das Füllmaterial in die Mehrzahl von getrennten Kammern (30a, 30b, 30c) zu injizieren, wobei eine Vorbereitungs- und Einspritzeinheit für jede der genannten Kammern (30a, 30b, 30c) bereitgestellt wird, und wobei die Steuereinrichtungen ein Ventil (21) umfassen, das allen Einheiten gemeinsam ist, zum gleichzeitigen Steuern des Flusses des Füllmaterials aus jedem der Einheiten in eine entsprechende Kammer und zum gleichzeitigen Einspritzen des Füllmaterials in die getrennten Kammern (30a, 30b, 30c).

2. Die Vorrichtung gemäß Anspruch 1, wobei das gemeinsame Ventil (21) eine perforierte Platte (62) umfasst, das mittels einer einzigen Stelleinrichtung (26) gleitet.

3. Die Vorrichtung gemäß Anspruch 1, wobei die Vorrichtung ein programmierbares Steuermodul (70) einschließt.

4. Die Vorrichtung gemäß Anspruch 3, wobei das programmierbare Steuermodul (70) wenigstens einen Zeitgeber für die Zeitsteuerung des Betriebs der Mischeinrichtung (9,16) und der Einspritzsteuereinrichtung (21, 26) umfasst.

5. Die Vorrichtung gemäß Anspruch 1, wobei die Einspritzeinrichtung aus einem Einspritzkanal (8) besteht, der aus dem Mischbehälter von jedem der genannten Einheiten herausführt, um das Füllmaterial in jede der getrennten Kammern (30a, 30b, 30c) einzuspritzen.

6. Die Vorrichtung gemäß Anspruch 1, wobei die Mischeinrichtungen (9, 16) mindestens einen rotierenden Rührer (16) für jede der Einheiten umfassen.

7. Die Vorrichtung gemäß Anspruch 6, wobei die Mischeinrichtungen (9, 16) aus einer Betriebsstellung bewegbar sind, in der ein rotierender Rührer (16) in den Mischbehälter (2) jeder Einheit eingesetzt ist, in eine Nicht-Betriebsposition, in der die rotierenden Rührer (16) aus jedem der Mischbehälter (2) herausgenommen sind.

8. Die Vorrichtung gemäß Anspruch 6, wobei jeder der Rührer (16) abnehmbar ist.

9. Die Vorrichtung gemäß Anspruch 6, wobei jeder der Rührer (16) eine Vielzahl von Rührblättern oder Rotoren umfasst, die in einer abnehmbaren Weise an einer drehbaren Antriebswelle befestigt sind.

10. Die Vorrichtung gemäß irgendeinem der vorhergehenden Ansprüche, wobei die Einheiten auf einem gemeinsamen Rahmen (10) montiert sind.

11. Die Vorrichtung gemäß Anspruch 10, wobei der gemeinsame Rahmen (10) Mittel zur Befestigung des gemeinsamen Rahmens auf einem Gerüst oder auf einer Brücke oberhalb des Bootes umfasst.

12. Die Vorrichtung gemäß Anspruch 10, wobei der gemeinsame Rahmen (10) Mittel zur Befestigung des gemeinsamen Rahmens auf einer Gießform des Bootes umfasst.

13. Ein Verfahren zur Injektion eines Füllmaterials in ein Boot mit einer Mehrzahl von getrennten Kammern (30a, 30b, 30c) mit den folgenden Schritten:
i. Bereitstellen einer Bootsstruktur mit einer Mehrzahl von getrennten Kammern, wobei jede Kammer durch längs vorlaufende Strukturelemente (50, 51) definiert ist, die zwischen einer oberen Hülle (200) und einer unteren Hülle (201) des Bootes positioniert und befestigt sind;
ii. Bereitstellen einer Vorrichtung gemäß irgendeinem der Ansprüche 1 bis 12, wobei die Vorrichtung Einheiten zur Vorbereitung und zum Einspritzen des Füllmaterials umfasst und Steuereinrichtungen (21, 26, 70), um das Füllmaterial in die Mehrzahl von getrennten Kammern (30a, 30b, 30c) zu injizieren, wobei jede der Einheiten mindestens einen Messbehälter (1) zur Dosierung eines ersten Reagenz, mindestens einen Mess- und Mischbehälter (2) zur Dosierung eines zweiten Reagenz und zum Mischen des ersten Reagenz mit dem zweiten Reagenz aufweist,
iii. Dosieren eines ersten Reagenz und eines zweiten Reagenz in die getrennten Behälter (1, 2) der Einheiten;
iv. Mischen des ersten Reagenz und des zweiten Reagenz für eine vorgegebene Zeit in dem entsprechenden Mischbehälter (2) einer jeden Einheit, um das Füllmaterial zu erhalten;
wobei das Füllmaterial in einer Mehrzahl von verschiedenen Zubereitungs- und Einspritzeinheiten zubereitet wird entsprechend der Anzahl der zu füllenden Kammern,
wobei das Füllmaterial gleichzeitig in die getrennten Kammern (30a, 30b, 30c) eingespritzt wird,
wobei die Steuermittel ein Ventil (21) umfassen, das allen Einheiten gemeinsam ist, um das gleichzeitige Fließen des Füllmaterials von jeder der Einheiten in eine entsprechende Kammer zu steuern, und
wobei das erste Reagenz und das zweite Reagenz in jede der Einheiten in Mengen eindosiert wird, die von dem Volumen einer jeden Kammer abhängen, um in jeder Kammer einen geschlossenzelligen Füllschaum zu erhalten, der die gleiche Dichte für alle Kammern (30a, 30b, 30c) aufweist.

14. Das Verfahren gemäß Anspruch 13, wobei ein Schritt vorgesehen ist, in dem das zweite Reagenz für eine voreingestellte Zeit gerührt wird, bevor es mit dem ersten Reagenz vermischt wird.

15. Das Verfahren gemäß Anspruch 13, wobei das gleichzeitige Einspritzen des Füllmaterials in die getrennten Kammern (30a, 30b, 30c) mit Hilfe der Schwerkraft durchgeführt wird.

16. Das Verfahren gemäß Anspruch 13, wobei das zweite Reagenz in einen Mischbehälter (2a, 2b, 2c) einer jeden Einheit zudosiert wird.

17. Das Verfahren gemäß Anspruch 13, wobei das erste Reagenz in einen Behälter (1a, 1b, 1c) zudosiert wird, der verschieden ist von dem Mischbehälter (2a, 2b, 2c) der Einheit.

18. Das Verfahren gemäß Anspruch 13, wobei das erste Reagens aus Isocyanat besteht und das zweite Reagenz aus Polyol besteht.

## Revendications

1. Dispositif pour l'injection d'un matériau de remplissage dans une pluralité de chambres séparées (30a, 30b, 30c) d'un bateau, incluant des unités pour la préparation et l'injection dudit matériau de remplissage, chacune desdites unités incluant au moins un contenant gradué (1) pour mesurer un premier réactif, au moins un contenant de mélange gradué (2) pour mesurer un deuxième réactif et pour mélanger ledit premier réactif avec ledit deuxième réactif, ledit au moins un contenant de mélange (2) étant pourvu de moyens (9, 16) pour mélanger ledit premier réactif et ledit deuxième réactif pour former ledit matériau de remplissage, ainsi qu'un moyen d'injection (8) et des moyens de commande (21, 26, 70) afin d'injecter ledit matériau de remplissage dans ladite pluralité de chambres séparées (30a, 30b, 30c), dans lequel une unité de préparation et d'injection est prévue pour chacune desdites chambres (30a, 30b, 30c) et dans lequel lesdits moyens de commande incluent un clapet (21) commun à toutes lesdites unités pour commander simultanément l'écoulement dudit matériau de remplissage depuis chacune desdites unités vers une chambre respective et injecter simultanément ledit matériau de remplissage dans lesdites chambres séparées (30a, 30b, 30c).

2. Dispositif selon la revendication 1, dans lequel ledit clapet commun (21) inclut une plaque perforée (62) coulissant à l'aide d'un unique actionneur (26).

3. Dispositif selon la revendication 1, ledit dispositif incluant un module de commande programmable (70).

4. Dispositif selon la revendication 3, dans lequel ledit module de commande programmable (70) inclut au moins un temporisateur pour l'opération de temporisation desdits moyens de mélange (9, 16) et desdits moyens de commande d'injection (21, 26).

5. Dispositif selon la revendication 1, dans lequel lesdits moyens d'injection sont constitués d'un conduit d'injection (8) sortant du contenant de mélange de chacune desdites unités pour injecter le matériau de remplissage dans chacune desdites chambres séparées (30a, 30b, 30c).

6. Dispositif selon la revendication 1, dans lequel lesdits moyens de mélange (9, 16) incluent au moins un agitateur rotatif (16) pour chacune desdites unités.

7. Dispositif selon la revendication 6, dans lequel lesdits moyens de mélange (9, 16) sont mobiles depuis une position de fonctionnement, dans laquelle un agitateur rotatif (16) est inséré dans le contenant de mélange (2) de chaque unité, jusqu'à une position de non-fonctionnement dans laquelle lesdits agitateurs rotatifs (16) sont extraits de chacun desdits contenants de mélange (2).

8. Dispositif selon la revendication 6, dans lequel chacun desdits agitateurs (16) est amovible.

9. Dispositif selon la revendication 6, dans lequel chacun desdits agitateurs (16) inclut une pluralité d'aubes ou rotors d'agitation fixés d'une manière amovible sur une tige d'entraînement rotative.

10. Dispositif selon l'une quelconque des revendications précédentes, dans lequel lesdites unités sont montées sur un cadre commun (10).

11. Dispositif selon la revendication 10, dans lequel ledit cadre commun (10) inclut des moyens pour fixer ledit cadre commun sur une charpente ou sur un pont au-dessus dudit bateau.

12. Dispositif selon la revendication 10, dans lequel ledit cadre commun (10) inclut des moyens pour fixer ledit cadre commun sur un moule dudit bateau.

13. Processus pour l'injection d'un matériau de remplissage dans un bateau comprenant une pluralité de chambres séparées (30a, 30b, 30c), incluant les étapes consistant à :
i. fournir une structure de bateau ayant une pluralité de chambres séparées, chaque chambre étant définie par des éléments structuraux longitudinaux (50, 51) positionnés et fixés entre une coque supérieure (200) et une coque inférieure (201) du bateau ;
ii. fournir un dispositif selon l'une quelconque des revendications 1-12, le dispositif incluant des unités pour la préparation et l'injection dudit matériau de remplissage et des moyens de commande (21, 26, 70) pour injecter ledit matériau de remplissage dans ladite pluralité de chambres séparées (30a, 30b, 30c), dans lequel chacune desdites unités inclut au moins un contenant gradué (1) pour mesurer un premier réactif, au moins un contenant de mélange gradué (2) pour mesurer un deuxième réactif et pour mélanger ledit premier réactif avec ledit deuxième réactif,
iii. mesurer un premier réactif et un deuxième réactif dans lesdits contenants séparés (1, 2) desdites unités ;
iv. mélanger ledit premier réactif et ledit deuxième réactif pendant un temps prédéfini dans le contenant de mélange (2) respectif de chaque unité afin d'obtenir ledit mélange de remplissage ;
dans lequel ledit matériau de remplissage est préparé dans une pluralité d'unités de préparation et d'injection distinctes correspondant au nombre de chambres à remplir,
dans lequel ledit matériau de remplissage est injecté simultanément dans lesdites chambres séparées (30a, 30b, 30c), dans lequel lesdits moyens de commande incluent un clapet (21) commun à toutes lesdites unités pour commander simultanément l'écoulement dudit matériau de remplissage depuis chacune desdites unités vers une chambre respective,
et dans lequel ledit premier réactif et ledit deuxième réactif sont mesurés dans chacune desdites unités en des quantités qui dépendent du volume de chaque chambre, afin d'obtenir dans chaque chambre une mousse de remplissage du type à cellules fermées ayant la même densité pour toutes les chambres (30a, 30b, 30c).

14. Processus selon la revendication 13, dans lequel est prévue une étape dans laquelle ledit deuxième réactif est agité pendant une durée prédéfinie avant d'être mélangé avec ledit premier réactif.

15. Processus selon la revendication 13, dans lequel l'injection simultanée dudit matériau de remplissage dans lesdites chambres séparées (30a, 30b, 30c) est effectuée par gravité.

16. Processus selon la revendication 13, dans lequel ledit deuxième réactif est mesuré dans un contenant de mélange (2a, 2b, 2c) de chaque unité.

17. Processus selon la revendication 13, dans lequel ledit premier réactif est mesuré dans un contenant (1a, 1b, 1c) distinct dudit contenant de mélange (2a, 2b, 2c).

18. Processus selon la revendication 13, dans lequel ledit premier réactif est constitué d'isocyanate et ledit deuxième réactif est constitué de polyol.
